# EUROPEAN PATENT APPLICATION

(11) **EP 2 999 192 A1**
(43) Date of publication of application: **23.03.2016**
(21) Application number: 14306449.1
(22) Date of filing: 19.09.2014
(51) Int. Cl.: H04L 29/08, H04L 12/26

(54) **Network system and method for checking plausibility of a value returned by a device**

(71) Applicant: Thomson Licensing, 92130 Issy-les-Moulineaux (FR); INRIA - Institut National de Recherche en Informatique et en Automatique, 78150 Le Chesnay (FR)
(72) Inventor: LE MERRER, Erwan, 35576 Cesson-Sévigné (FR); LE SCOUARNEC, Nicolas, 35576 Cesson-Sévigné (FR); LUDINARD, Romaric, 35042 Rennes Cedex (FR)
(74) Representative: Huchet, Anne

(57) **Abstract**

A network system and a method for checking plausibility of value returned by a device in the network system are provided. The network system comprises a plurality of devices. The method for checking plausibility of value returned by a device comprises: computing, by the device, a first hash address in a distributed hash table based on network addressing information and a current output value of the device; determining, by the device, a plurality of current neighbors in the distributed hash table; advertizing, by the device, the current output value of the device and a previous output value of the device to the determined plurality of current neighbors; and checking, by each of the determined plurality of current neighbors, the plausibility of value returned by the device.

## Description

### TECHNICAL FIELD

The present disclosure relates to device management in network, and particularly to a network system and a method for checking plausibility of value returned by a device in the network system.

### BACKGROUND

In a network, there are commonly a large set of autonomous devices, the autonomous devices or particular applications in the autonomous devices are monitored to ensure normal operation of a monitored service. In such a monitoring context, the operator needs to obtain reliable information from the monitored devices so that it can identify problems that are happening, such as typically service degradation when the autonomous devices are home gateways, for instance.

However, some particular monitored applications or devices cannot be trusted. For example, in order for gratification to be rewarded, a user of such an application or a device may control the application or the device to lie about value(s) to be returned to the operator.

For example, in a peer-to-peer (P2P) network, a specific application or device returns a value to the operator to indicate that it is always operating (or up), but the specific application or device is actually sleeping (or down) for saving electricity/bandwidth for instance. The outcome of lying is that the specific application or device will be able to access the P2P service, despite the fact that it does not even participate to the P2P service.

In order to recognize whether a specific application or a specific device lies about the value(s) returned to the operator, a monitoring approach is proposed in a paper "AVMON: Optimal and Scalable Discovery of Consistent Availability Monitoring Overlays for Distributed network systems (IEEE TPDS 2009)" for avoiding that applications in a P2P network lie about their actual availability. In the paper, for a specific P2P network node (i.e. application or device) in a P2P network, a subset of P2P network nodes (i.e. P2P applications or devices) are firstly randomly selected, and then asked to monitor the actual and measurable (by using PING) availability of the specific P2P network node. In other words, every P2P network node is supervised by some other P2P network nodes, so that it cannot lie about its real availability. In such monitoring approach, the monitored value (here, the node availability) must be measurable externally, and particularly with the PING tool.

Nevertheless, there is a broad range of values to be monitored that cannot be measured externally. This is for instance the case in collaborative navigation applications like Waze, where an installed Waze application on a smartphone frequently provides GPS position of the user. This is also the case for QoS (or QoE) in home gateways, as this QoS is resulting from the complex interaction of many parameters within the gateway (jitter, packet loss, software configuration, etc), and thus could not be assessed by the operator externally by observing each gateway from the outside.

In order to maximize some gain in a specific application or device, a user of the application or device may have incentive in providing false values. For example, in Waze application, a user earns credit if his GPS location is on yet-non-observed streets or roads, which gives an incentive for the user to lie about his real position.

Therefore, it is necessary to assess whether the values that are not measurable externally but returned by the specific applications or devices are indeed correct (or called valid), otherwise the operator is forced to trust the device or application returning the value, which may cause malfunction of the overall service.

### SUMMARY

According to one aspect of embodiments of the present disclosure, there is provided a method for checking plausibility of a value returned by a device, comprising: computing, by the device, a first hash address in a distributed hash table based on network addressing information (such as IP address, and port of the device) and a current output value of the device; determining, by the device, a plurality of current neighbors in the distributed hash table; advertizing, by the device, the current output value of the device and a previous output value of the device to the determined plurality of current neighbors; and checking, by each of the determined plurality of current neighbors, the plausibility of the current output value of the device.

According to another aspect of the embodiments of the present disclosure, there is provided a method for checking plausibility of a current output value returned by a device, comprising: receiving, by a neighbor of the device at a current time instant, a current output value and a previous output value of the device; judging, by the neighbor of the device, whether a value evolution between the current output value and the previous output value of the device is greater than a predefined value evolution threshold; and determining and reporting, by the neighbor of the device, that the value evolution of the device is implausible if the value evolution is greater than the predefined value evolution threshold.

According to another aspect of the embodiments of the present disclosure, there is provided a network system, comprising a plurality of monitored devices. For each of the monitored devices, the monitored device computes a first hash address in a distributed hash table based on network addressing information and a current output value of the monitored device; determines a predefined number of current neighboring monitored devices of the monitored device in the plurality of monitored devices in the distributed hash table; advertizes the current output value and a previous output value of the monitored device to the predefined number of current neighboring monitored devices; and for each of the predefined number of current neighboring monitored devices of the monitor device, the current neighboring monitored device checks the plausibility of the current output value returned by the monitored device.

According to another aspect of the embodiments of the present disclosure, there is further provided a computer program product downloadable from a communication network and/or recorded on a medium readable by computer and/or executable by a processor, comprising program code instructions for implementing steps of any one of the above methods.

According to another aspect of the embodiments of the present disclosure, there is further provided a checking device for checking plausibility of a value returned by a device, wherein the checking device is a neighbor of the device at a current time instant, it comprises a receiving module for receiving a current output value and a previous output value of the device; and a processor for judging whether a value evolution between the current output value and the previous output value of the device is greater than a predefined value evolution threshold; and determining and reporting that the value evolution of the device is implausible if the value evolution is greater than the predefined value evolution threshold

According to another aspect of the embodiments of the present disclosure, there is further provided a non-transitory computer-readable medium comprising a computer program product recorded thereon and capable of being run by a processor, including program code instructions for implementing steps of any one of the above methods.

According to the embodiments of the present disclosure, attacks over the returned value by an attacking device (lying device) may make resources of the attacking device being exhausted, and the randomness of the device position in the distributed hash table ensured by the use of the secure hash function (e.g. SHA, MD5) is leveraged for ensuring that the attacking device (lying device) cannot collude with others liars in order to get a correct assessment for a false value.

### BRIEF DESCRIPTION OF THE DRAWINGS

In order to more clearly describe the technical solutions of the embodiments of the present disclosure or the prior art, drawings necessary for describing the embodiments of the present disclosure or the prior art are simply introduced as follows. It should be obvious for those skilled in the art that the drawings described as follows only illustrate some embodiments of the present disclosure and other drawings can be obtained according to these drawings without paying any inventive efforts.
Fig.1 is a schematic flowchart of a method for checking plausibility of a value returned by a device in a network according to embodiments of the present disclosure;
Fig.2 is a schematic view of a distributed hash table according to the embodiments of the present disclosure;
Fig.3A-Fig.3D are schematic views of steps of the method for checking the plausibility of the value returned by the device in the network according to the embodiments of the present disclosure;
Fig.4 is a schematic flowchart of a method for checking plausibility of a value returned by a device performed by a neighbor of the device according to the embodiments of the present disclosure;
Fig.5A is a schematic view of an implausible movement of a lying device according to the embodiments of the present disclosure;
Fig.5B is a schematic view of a valid sequence of movement of a device according to the embodiments of the present disclosure; and
Fig.6 is another schematic flowchart of a method for checking plausibility of a value returned by a device performed by a neighbor of the device according to the embodiments of the present disclosure.

### DETAILED DESCRIPTION OF THE PREFERRED EMBODIMENTS

To illustrate the technical solutions of embodiments of the present disclosure clearly and fully, hereinafter, detailed descriptions will be made to the embodiments of the present disclosure in connection with the accompanying drawings. Obviously, the embodiments as described are only a part of the embodiments of the present disclosure, and are not all the embodiments of the present disclosure. All the other embodiments which are obtained by those skilled in the art based on the embodiments of the present disclosure without paying any inventive labor fall into the protection of the present disclosure.

In the present disclosure, we use as a communication layer the well-known concept of a distributed hash table. In a paper "Chord: a scalable P2P lookup service for Internet applications", the distributed hash table is introduced, it allows each device in a P2P network to connect to a small number of other devices and allows messages to be routed from one device to other devices in the P2P network. Commonly, each network node (i.e. application or device) in the P2P network hashes network addressing information to get its position in the distributed hash table. The network addressing information may comprise IP address, or a combination of IP address and port number, or a combination of device ID, IP address and port number, or the like. In addition, the port number may be a UDP port number.

Before particularly describing the method for checking plausibility of a value returned by a device in a network according to the embodiments of the present application, a specific protocol performed in the case where a device X joins the network as a new node for the first time will be described, in particular, the device X tries through the Chord protocol to be inserted in the routing tables of the DHT through a JOIN command.

For an initial insertion of the device X in the DHT, the device X has to contact a central server. An unforgettable token is given by that central server controlled by the network operator to the device X newly joining the network for the first time. This token is an assessment by the central sever that the initial value claimed by the device X is plausible (for an initial one) and that the device X is indeed new in the system (by checking from hardware characteristics (a unique identifier for instance) of the device X).

Then, this token has to be given by the new joined device X to its new neighbors in the DHT, declaring that the device X is new to the network and that the proof is this given token. Those neighbors can then directly contact the central server with that token to verify whether the device X is indeed joining the network for the first time. The token is valid if the device X is indeed joining the network for the first time, otherwise the token is invalid or has been already used and thus the device X is lying.

In case of a valid token, the claimed initial value is accepted by the neighbors. That is, in case of valid token, the neighbors accept the claimed initial value of the device X without making other additional verification.

With the aid of the token given by the central server, it can be effectively avoided that the device X lies that it just jointed the network and thus had no previous neighbors and values.

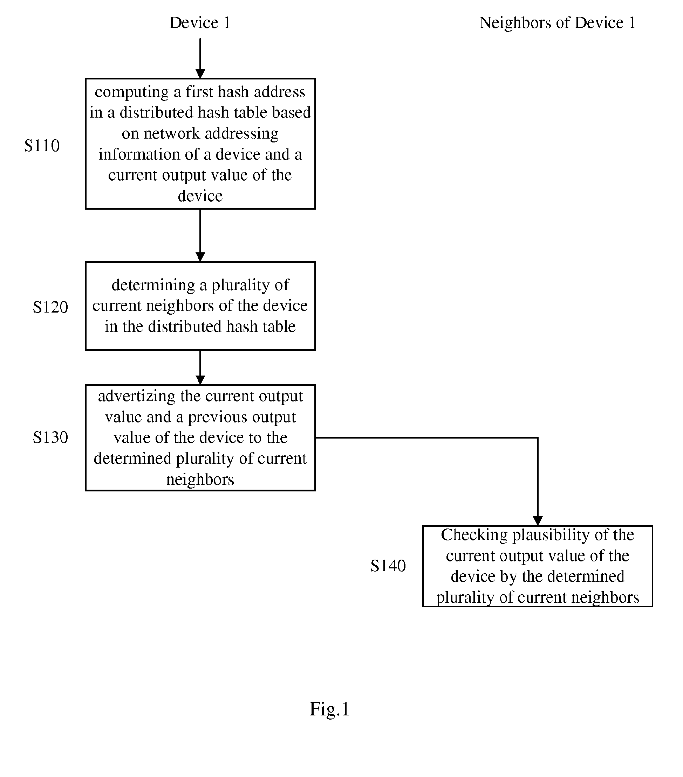

Fig.1 is a schematic flowchart of a method for checking plausibility of a value returned by a device in a network according to embodiments of the present disclosure.

In the network, there are a plurality of network nodes (i.e. applications or devices), each of these network nodes returns at least one output value to the operator to indicate state of the network node, but at least part of the at least one output value of the network node cannot be measured or monitored externally by other network nodes in the network.

At first, at step S110, instead of hashing network addressing information of the device h(<network addressing information>), the device (Device 1) computes a first hash address in a distributed hash table (DHT) based on network addressing information of the device and a current output value of the device, i.e. h(<network addressing information, output value>).

The singular form of the output value in the present disclosure may comprise the corresponding plural form. That is, the output value of the device may be a single monitored output value or may be a combination of a plurality of monitored output values.

Time is discretized in the embodiments of the present disclosure. At each discretized time instant, the distributed hash table (DHT) is updated in each device and is represented by a round.

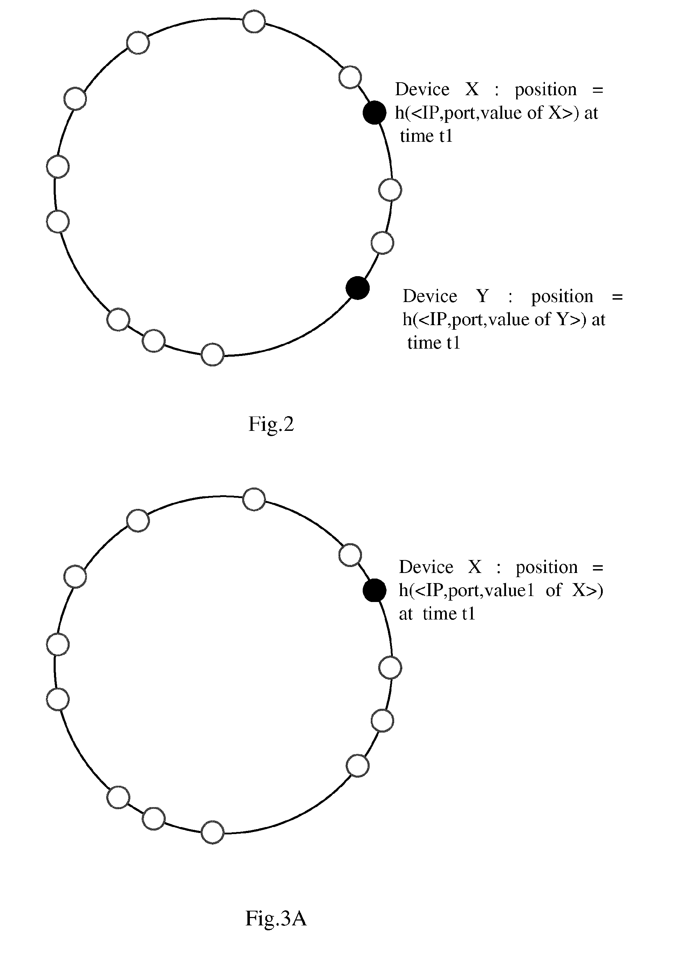

As shown in Fig.2, at a specific time instant (or called time point), a device X has a position defined by h(<IP, Port, Value of X>) and the device Y has a position defined by h(<IP, Port, Value of Y>).

At step S120, the device (Device 1) determines a plurality of current neighbors of the device (Neighbors of Device 1) in the distributed hash table.

According to the embodiments of the present disclosure, the randomness of the device position in the DHT is ensured by the use of the secure hash function (e.g. SHA, MD5) on the network addressing information and the output value of the device, that is, the randomness of the neighbors is ensured, so that it can be ensured that a lying node cannot collude with other liars in order to get a correct assessment for a false value.

At step S130, the device advertizes the current output value and a previous output value of the device to the determined plurality of current neighbors (Neighbors of Device 1).

At step S140, the determined plurality of current neighbors (Neighbors of Device 1) check the plausibility of the current output value returned by the device (Device 1).

Next, the operations of the method for checking plausibility of the current output value returned by the device according to the embodiments of the present disclosure will be described in detail.

Fig.3A-Fig.3D are schematic views of steps of the method for checking the plausibility of the current output value returned by the device in the network according to the embodiments of the present disclosure.

At a time instant t1, the device X has an output value (Value1), the position of the device X in DHT at the time instant t1 is defined by the hash function h(<IP, Port, Value1 of X>). In Fig.3A, the position of the device X in DHT at the time instant t1 is represented by a black solid circle.

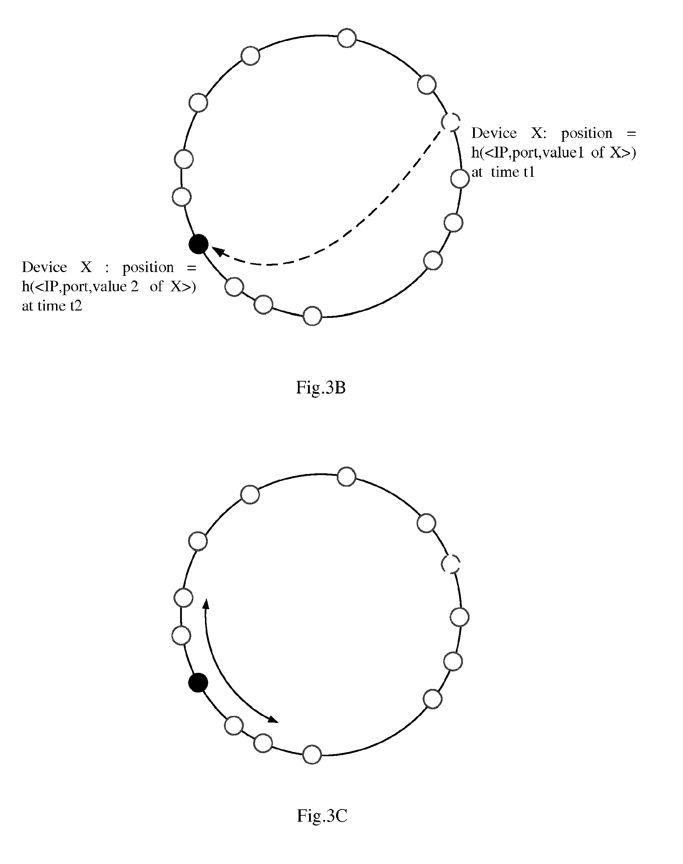

At another time instant t2 immediately next to the time instant t1, the device X has an output value (Value2), the position of the device X in DHT at the time instant t2 is defined by the hash function h(<IP, Port, Value2 of X>). In Fig.3B, the position of device X in DHT at the time instant t1 is represented by a dash circle, the position of device X in DHT at the time instant t2 is represented by a black solid circle, and the movement from the position at the time instant t1 to the position at the time instant t2 is shown by a dash curve.

That is, when the device X experiences a value change from Value1 to Value2 between the time instant t1 and the time instant t2, its location (position) in the DHT thus changes, as it must stay at the h(<IP, Port, Value of X>) address (position) in the DHT. This device X then changes its position accordingly.

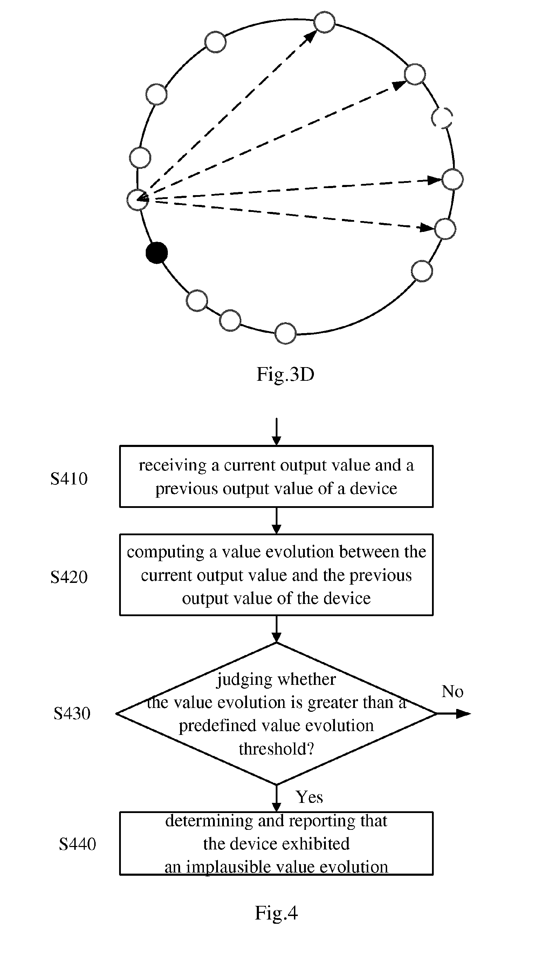

It should be clear that the position of device X in DHT at the time instant t1 represented by the dash circle does not exist actually in the round of the time instant t2 shown in Fig.3B, the dash circle is shown just for comparison with the position of the device X at the time instant t2 represented by the black solid circle. Similarly, the dash circle does not exist actually in the round of the time instant t2 shown in Fig.3C and Fig.3D.

Although the network addressing information is represented by IP address (IP) and Port number (Port) in Fig.2, Fig.3A and Fig.3B, the embodiments of the present disclosure are not so limited.

When the device X computes its new position in the DHT at the time instant t2, the device X determines its immediate neighbors in the DHT at the time instant t2.

Here, for a network comprising N nodes (i.e. devices), the device X may determine its immediate O(logN) neighbors in the DHT at the time instant t2. As an example, when N=10000, the device X determine its immediate O(log(10000)) neighbors, which can be as small as few units to very few tens of neighbors, as shown in Fig.2C. Actually, O(logN) is an indicating value which need to be fixed once when such protocol is deployed. For example, O(logN) could be 5*logN in practice.

After determining the O(logN) immediate neighbors in the DHT, the device X informs the O(logN) immediate neighbors of its current output value Value2 at the time instant t2 and its previous output value Value1 at the time instant t1.

Then, the O(logN) immediate neighbors check the plausibility of the current output value returned by of the device X based on the current output value Value2 and the previous output value Value 1 of the device X.

As described above, instead a hash address is computed based on the network addressing information in the existing DHT method, a new parameter (i.e. output value) is introduced in the secure hash function. Here, the new parameter not only may be a single parameter, but also may be a combination of more than one parameters. That is, the output value may be at least one output value of the device X.

In such a manner, when the output value of the device X is changed with time, the position (location) of the device X in the DHT is also changed. As a result, the neighbors of the device X may also be changed, and it is not possible for a lying node to collude with the changed neighbors in order to get a correct assessment for a false value.

Now, taking any one neighbor of the device X as an example, the operations of the neighbors of the device X will be described with reference to Figs.4-6.

Fig.4 is a schematic flowchart of a method for checking plausibility of a current output value returned by a device performed by a neighbor of the device according to the embodiments of the present disclosure.

At step S410, the neighbor of the device X receives the current output value Value2 at the time instant t2 and the previous output value Value1 at the time instant t1 of the device X.

At step S420, the neighbor of the device X computes a value evolution between the current output value Value2 at the time instant t2 and the previous output value Value1 at the time instant t1 of the device X.

At step S430, the neighbor of the device X judges whether the value evolution is greater than a predefined value evolution threshold.

If it is judged that the value evolution between the current output value Value2 at the time instant t2 and the previous output value Value1 at the time instant t1 of the device X is greater than the predefined value evolution threshold, the neighbor of the device X can determine that the device X lies about its output value at step S440. That is, the device X exhibits an implausible value evolution.

When the neighbor of the device X determines that the device X lies about its output value, it can also report to an operator that the device X lies about the output value at the step S440.

The method for checking the plausibility of the current output value of the device X performed by the neighbor of the device X as shown in Fig.4 relies on the plausibility of value evolution between the current time instant t2 and the previous time instant t1.

For instance, if the operator of a park of gateways knows from the hardware/software implementation of a given service (e.g. VoIP) that the MOS (mean opinion score) cannot drop by more than 3 units (in the [1, ..., 5] range) by less than 1 minute, if a gateway reports a value of 4, then it is trivial to see that the reported value is a lie. Similarly, if a GPS-enabled tracked device reports a position evolution that is not realistic (too fast physically), then the reported position evolution is probably a lie. Considering the collaborative navigation application, if a user claims that its position is at 100km from its previous location returned few minutes ago, then it is obvious that this new returned GPS value is false, and that the devices tries to hack the application for gaining rewards.

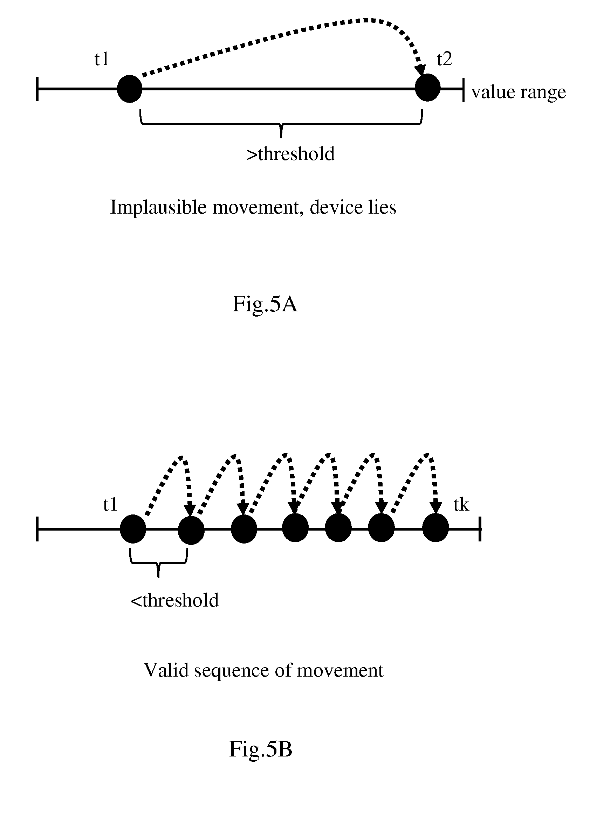

If the value evolution from the previous time instant t1 to the current time instant t2 has exceeded the predefined value evolution threshold, for example, the value evolution of the above gateway has exceeded the predefined value evolution threshold 3 in 1 minute, or the value evolution of the above GPS-enable tracked device has exceeded a predefined value evolution threshold 10km in 1 minute, such value evolution is called as implausible evolution of the monitored value. Fig.5A shows an implausible evolution of the monitored value in the value range.

Different from the implausible value evolution, a plausible value evolution between the previous output value at the previous time instant t1 and the current output value at the current time instant t2 should be less than the predefined value evolution threshold. A most probable plausible value evolution sequence (i.e. valid sequence of movement) coming from a real problem or legitimate movement of a device is shown in Fig.5B.

When the method for checking the plausibility of the current output value of the device X performed by the neighbor of the device X shown in Fig.4 judges that the value evolution is an implausible evolution of the monitored value, it can be determined that the monitored device lies about the monitored value. On the contrary, when the method for checking the plausibility of the current output value of the device X performed by the neighbor of the device X shown in Fig.3 judges that the value evolution is a plausible evolution of the monitored value, we cannot determine that the monitored device does not lie about the monitored value.

Therefore, the method shown in Fig.4 ensures that attacks over the returned value by an attacking device make resources of the attacking device (lying device) being exhausted. But the method shown in Fig.4 cannot guarantee that the (multi-hop and sequential) sequence shown in Fig.5B is not generated by an attacking device (lying device).

Actually, forcing an attacker (an attacking device or a lying device) to mimic such a sequence of value evolutions (from the initial value at the time instant t1 to the target value at the time instant tk) in the value space is intended to exhaust the resource (time, computation, for instance) of the attacker, such that the probability of such attacks is highly reduced.

In this simple and non-intrusive (thus more general) model, we do not control the devices, but we can make the probability of attack low with such a method by making the value evolution less than in a predefined value evolution threshold.

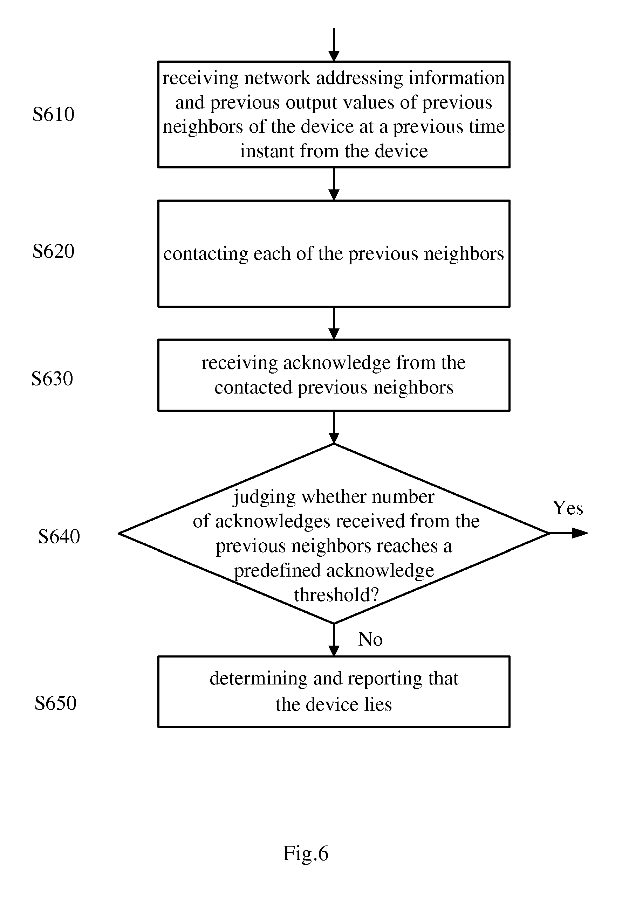

Fig.6 is another schematic flowchart of the method for checking the plausibility of the current output value of the device performed by the neighbor of the device according to the embodiments of the present disclosure.

At step S610, the neighbor of the device X receives the network addressing information and previous values of previous neighbors of the device X at the previous time instant t1 from the device X.

At step S620, the neighbor of the device X contacts each of the previous neighbors according to the position of the previous neighbor of the device X in the DHT. For example, the position of the previous neighbor of the device X may correspond to h(<IP-pre-neighbor, Port-pre-neighbor, Value-pre-neighbor>), where IP-pre-neighbor and Port-pre-neighbor represent the network addressing information of one previous neighbor at the previous time instant t1, and Value-pre-neighbor represents the previous output value of the previous neighbor at the previous time instant t1. That is to say, the neighbor of the device X at the current time instant t2 identifies the O(logN) neighbors of the previous position of the device X in the DHT at the previous time instant t1, since the neighbor of the device X at the current time instant t2 now knows the network addressing information and the previous output value of the previous neighbor of the device X at the time instant t1 and thus can recompute h(<IP-pre-neighbor, Port-pre-neighbor, Value-pre-neighbor>) of each of the previous neighbors of the device X at the current time instant t1.

In other words, when the device X has a value change, the device X not only sends the network addressing information of its previous neighbors at the previous time instant t1, but also sends the previous output values of its previous neighbors at the previous time instant t1 to the its current neighbor at the current time instant t2. So the current neighbor of the device X at the current time instant t2 can compute h(<IP-pre-neighbor, Port-pre-neighbor, Value-pre-neighbor>), to check whether the previous neighbor corresponding to the network addressing information (IP-pre-neighbor and Port-pre-neighbor) is actually still at such computed location (position), and then interrogate the previous neighbor, to know if the claimed new value of X at t1 is correct. This is simply checked by assessing if the position of X at t1 was correct (i.e. X was indeed a neighbor of those neighboring nodes at t1). The fact that those previous neighbors are at the same location prevent colluding nodes, since a node that claims a new value and then gets a new address in the DHT cannot give its new neighbors a fake list (of actually colluding) nodes that would confirm its lie. The protocol thus conserves the invariant of nodes not being able to forge their position in the DHT, and then no being able to forge their values as well.

At step S630, the neighbor of the device X receives acknowledge from the contacted previous neighbors. At the same time, the neighbor of the device may count acknowledges received from the previous neighbors of the device X at the previous time instant t1.

At step S640, the neighbor of the device X judges whether number of positive acknowledges received from the previous neighbors reaches a predefined acknowledge threshold, that depends on the dynamics of the system (old neighbors may have also moved from their old position), and a bound on the number of possible colluders in the system

If it is determined that the number of the positive acknowledges received from the previous neighbors does not reach the predefined acknowledge threshold, the neighbor of the device X can determine that the device X lies about its previous neighbors at step S650. When the neighbor of the device X determines that the device X lies about the previous neighbors of the device X, it also reports to an operator that the device X is not available at the step S650.

Here, the predefined acknowledge threshold may ensure a majority of positive answers from the contacted previous neighbors, or may be majority minus epsilon (ε) with ε being set depending on the churn of devices in the network as devices may disappear or disconnect in the network, or move due to a change in their current output value.

In this method, the devices in the network can watch or monitor each other in a scalable fashion, at each move or evolution step, a device X has to inform its current immediate O(logN) (or any other quantity that ensures the scalability of the method) neighbors in the DHT of its output value at the previous time instant t1, and has to perform network querying on its previous neighbors at the previous time instant t1 in the DHT. Since we cannot trust a device directly, the current neighbors of the device X at the current time instant t2 must contact the previous neighbors of the device X at the previous time instant t1 to ask if they indeed know that the value announced by the device X is correct.

In the above described method, the hash function used by the DHT guarantees the position randomness of each single device in the overlay, and thus the randomness of the neighbors of the device that watch/monitor the device.

In the above described method, all devices in the network that are monitored collaborate to assess value evolution, even in the presence of lying nodes (devices). The above described method is distributed over the set of monitored devices, and is then cheap for the operator. An equivalent operation could be made centrally in a cloud like environment, but may be very costly for running such a resilient service.

Additionally, in other embodiments of the present disclosure, a periodic proof of the position of the device X may be required. For example, in the case of GPS tracking, it may be necessary for the device X to prove that the device X knows its neighbor's Wifi signals. The trustability of the device X would decrease slowly at each round, and be reset to fully trusted each time when the device X provides a proof of its position.

Additionally, in other embodiments of the present disclosure, the current neighbors of the device X may use evidences of the previous position signed by the previous neighbors, instead of contacting the previous neighbors directly.

Additionally, in order to save some communication, the checking may be probabilistic.

Furthermore, the above described method is based on a simple non-intrusive software protocol, which suffices to forbid lying devices without the need for introducing specialized hardware or more complex cryptographic protocols.

The above described method checkpoints values of applications/devices regularly to assess the plausibility of their evolution. In this checkpointing, the applications/devices are self-evaluated in a distributed fashion, this prevents the operator for having to compute many metric evolution for each device on a central point like the cloud, where computation is billed, and then costly as massive.

To sum up, the above described method is generic, and can be used in a wide variety of contexts, where one or multiple values are sent by devices or applications, in order for an operator or management point to derive information about the evolution of those values (monitoring, tracing, logging). Particularly, if one can observe that a lying device is discarded from a network without performing point-to-point network communication with the central operator when the lying device sends a false value, then there is a great chance that the above described method is implemented in those devices.

Furthermore, according to the embodiments of the present disclosure, there is further provided a network system comprising a plurality of monitored devices.

For each of the monitored devices, the monitored device computes a first hash address in a distributed hash table based on network addressing information and a current output value of the monitored device; determines a predefined number of current neighboring monitored devices of the monitored device in the plurality of monitored devices in the distributed hash table; advertizes the current output value and a previous output value of the monitored device to the predefined number of current neighboring monitored devices.

For each of the predefined number of current neighboring monitored devices of the monitor device, the current neighboring monitored device checks the availability of the monitored device.

Optionally, each of the predefined number of current neighboring monitored devices may judge whether a value evolution between the advertized current output value and the advertized previous output value is greater than a predefined value evolution threshold; and determines and reports that the monitored device is not available if the value evolution is greater than a predefined value evolution threshold.

Optionally, the monitored device further advertizes the first hash address and the network addressing information of the monitored device to the predefined number of current neighboring monitored devices. Each of the predefined number of current neighboring monitored devices further computes a second hash address in the distributed hash table based on the network addressing information and the current output value of the monitored device; and determines and reports that the monitored device is not available if the second hash address differs from the first hash address.

Optionally, the monitored device further advertizes network addressing information of previous neighboring monitored devices to the predefined number of current neighbor monitored devices. Each of the predefined number of current neighboring monitored device contacts with each of the previous neighboring monitored devices; judges whether number of positive acknowledges received from the previous neighboring monitored devices reaches a predefined acknowledge threshold; and determines and reports that the device is not available if the number of positive acknowledges received from the previous neighboring monitored devices fails to reach the predefined acknowledge threshold.

Particularly, the number of the plurality of the monitored devices in the network system is N, and the predefined number of the neighboring monitored device is O(logN).

Furthermore, according to the embodiments of the present disclosure, there is further provided a computer program product downloadable from a communication network and/or recorded on a medium readable by computer and/or executable by a processor, comprising program code instructions for implementing the steps of the method described with reference to any one of Fig.1, Fig.4 and Fig.6.
Furthermore, according to the embodiments of the present disclosure, there is further provided a non-transitory computer-readable medium comprising a computer program product recorded thereon and capable of being run by a processor, including program code instructions for implementing the steps of the method described with reference to any one of Fig.1, Fig.4 and Fig.6.It should be appreciated that the above embodiments are only for illustrating the principle of the present disclosure, and in no way limit the scope of the present disclosure. It will be obvious that those skilled in the art may make modifications, variations and equivalences to the above embodiments without departing from the scope of the present disclosure as defined by the following claims. Such variations and modifications are intended to be included within the scope of the present disclosure.

## Claims

1. A method for checking plausibility of a value returned by a device, **characterized by**:
computing, by the device, a first hash address in a distributed hash table based on network addressing information and a current output value of the device (S110);
determining, by the device, a plurality of current neighbors in the distributed hash table (S120);
advertizing, by the device, the current output value of the device and a previous output value of the device to the determined plurality of current neighbors (S130); and
checking, by each of the determined plurality of current neighbors, the plausibility of the current output value of the device (S140).

2. Method according to claim 1, wherein said checking by each of the determined plurality of current neighbors the plausibility of the current output value of the device comprises:
judging, by each of the determined plurality of current neighbors, whether a value evolution between the advertized current output value and the advertized previous output value is greater than a predefined value evolution threshold (S430); and
determining and reporting, by each of the determined plurality of current neighbors, that the value evolution of the device is implausible if the value evolution is greater than a predefined value evolution threshold (S440).

3. Method according to claim 1, further comprising:
advertizing, by the device, network addressing information of previous neighbors of the device to the determined plurality of current neighbors;
wherein said checking by each of the determined plurality of current neighbors the plausibility of the current output value of the device further comprises:
contacting, by each of the determined plurality of current neighbors, with each of the previous neighbors;
judging, by each of the determined plurality of current neighbors, whether number of positive acknowledges received from the previous neighbor device reaches a predefined acknowledge threshold; and
determining and reporting, by each of the determined plurality of current neighbors, that the device lies if the number of positive acknowledges received from the previous neighbor device fails to reach the predefined acknowledge threshold.

4. Method according to claim 1, wherein the network addressing information comprises IP address, or comprises the IP address and port number, or comprises Device ID, the IP address and the port number.

5. Method according to any one of claims 1-4, wherein the device and the neighbor of the device are GPS devices, the current output value of the device is a GPS position value at a current time instant, and the previous output value of the device is a GPS position value at a previous time instant; or
the device and the neighbor of the device are home gateways, the current output value of the device is a mean opinion score at a current time instant, and the previous output value of the device is a mean opinion score at a previous time instant.

6. Method for checking plausibility of a value returned by a device, **characterized by** comprising:
receiving, by a neighbor of the device at a current time instant, a current output value and a previous output value of the device (S410);
judging, by the neighbor of the device, whether a value evolution between the current output value and the previous output value of the device is greater than a predefined value evolution threshold (S430); and
determining and reporting, by the neighbor of the device, that the value evolution of the device is implausible if the value evolution is greater than the predefined value evolution threshold (S440).

7. Method according to claim 6, further comprising:
receiving, by the neighbor of the device, network addressing information and previous output values of previous neighbors of the device at a previous time instant from the device (S610);
contacting, by the neighbor of the device, with each of the previous neighbors (S620);
receiving, by the neighbor of the device, acknowledges from the previous neighbors (S630);
judging, by the neighbor of the device, whether number of acknowledges received from the previous neighbors reaches a predefined acknowledge threshold (S640); and
determining and reporting, by the neighbor of the device, that the device lies if the number of positive acknowledges received from the previous neighbors fails to reach the predefined acknowledge threshold (S650).

8. Method according to claim 6, wherein the network addressing information comprises IP address, or comprises the IP address and port number, or comprises Device ID, the IP address and the port number.

9. Method according to any one of claims 6-8, wherein the device and the neighbor of the device are GPS devices, the current output value of the device is a GPS position value at a current time instant, and the previous output value of the device is a GPS position value at a previous time instant; or
the device and the neighbor of the device are home gateways, the current output value of the device is a mean opinion score at a current time instant, and the previous output value of the device is a mean opinion score at a previous time instant.

10. A network system, comprising a plurality of monitored devices, **characterized in that**,
for each of the monitored devices, the monitored device computes a first hash address in a distributed hash table based on network addressing information and a current output value of the monitored device; determines a predefined number of current neighboring monitored devices of the monitored device in the plurality of monitored devices in the distributed hash table; advertizes the current output value and a previous output value of the monitored device to the predefined number of current neighboring monitored devices;
for each of the predefined number of current neighboring monitored devices of the monitor device, the current neighboring monitored device checks the plausibility of the current output value of the monitored device.

11. Network system according to claim 10, wherein
the current neighboring monitored device judges whether a value evolution between the advertized current output value and the advertized previous output value is greater than a predefined value evolution threshold; and determines and reports that the value evolution of the device is implausible if the value evolution is greater than a predefined value evolution threshold.

12. Network system according to claim 10, wherein
the monitored device further advertizes network addressing information and previous output values of previous neighboring monitored devices to the predefined number of current neighbor monitored devices; and
each of the predefined number of current neighboring monitored device contacts with each of the previous neighboring monitored devices; judges whether number of positive acknowledges received from the previous neighboring monitored devices reaches a predefined acknowledge threshold; and determines and reports that the device lies if the number of positive acknowledges received from the previous neighboring monitored devices fails to reach the predefined acknowledge threshold.

13. Network system according to any one of claim 10-12, wherein number of the plurality of the monitored devices is N, and the predefined number of the neighboring monitored device is O(logN).

14. Checking device for checking plausibility of a value returned by a device, **characterized in that** the checking device is a neighbor of the device at a current time instant, comprising
a receiving module for receiving a current output value and a previous output value of the device; and
a processor for judging whether a value evolution between the current output value and the previous output value of the device is greater than a predefined value evolution threshold; and determining and reporting that the value evolution of the device is implausible if the value evolution is greater than the predefined value evolution threshold.

15. Computer program product downloadable from a communication network and/or recorded on a medium readable by computer and/or executable by a processor, **characterized by** comprising program code instructions for implementing the steps of a method according to at least one of claims 1 to 9.

16. Non-transitory computer-readable medium **characterized by** comprising a computer program product recorded thereon and capable of being run by a processor, including program code instructions for implementing the steps of a method according to at least one of claims 1 to 9.
